# EUROPEAN PATENT SPECIFICATION

(11) **EP 3 148 185 B1**
(45) Date of publication and mention of the grant of the patent: **15.04.2020**
(21) Application number: 14892403.8
(22) Date of filing: 19.09.2014
(51) Int. Cl.: H04N 7/15, H04L 12/18

(54) **ACCESSING METHOD, SYSTEM AND STORAGE MEDIUM FOR VIDEO CONFERENCE**
ZUGRIFFSVERFAHREN, SYSTEM UND SPEICHERMEDIUM FÜR VIDEOKONFERENZEN
PROCÉDÉ D'ACCÈS, SYSTÈME, ET SUPPORT DE STOCKAGE POUR UNE VIDÉOCONFÉRENCE

(30) Priority: 22.05.2014 CN 201410220166
(43) Date of publication of application: 29.03.2017
(73) Proprietor: ZTE Corporation, Shenzhen, Guangdong 518057 (CN)
(72) Inventor: XU, Huijing, Shenzhen Guangdong 518057 (CN); ZHOU, Yuexi, Shenzhen Guangdong 518057 (CN)
(74) Representative: Baudler, Ron
(86) International application number: PCT/CN2014/086977
(87) International publication number: WO 2015/176432

(56) References cited:
- WO-A1-98/20410
- CN-A- 101 223 730
- CN-A- 101 257 395
- GB-A- 2 490 759
- US-A1- 2010 149 302
- US-A1- 2013 342 637
- US-B1- 7 353 251

## Description

### Technical Field

The present invention relates to a multimedia communication technology, and more particularly to a video conference access method and system and a storage medium.

### Background of the Related Art

Along with development of multimedia communication technologies, breakthroughs in conventional local area network or private network-based video communication technologies are continuously made to implement Internet-based development. A video conference, as an application of a video communication technology, is a communication manner for holding a conference between participants in two or more than two places to send sounds and/or images in real time through video conference terminals or mobile terminals. The participants may present opinions and watch site conditions of the other conference places of the video conference through the video conference terminals or the mobile terminals. The participants may show real objects, drawings, documents, calligraphies and paintings or the like for communicating with all the participants of the video conference in the video conference, so that the participants in different places may feel like talking "face to face" with each other, and an effect of replacing a big on-site conference may be achieved.

For a conventional manner for accessing to a video conference based on local area network or private network, although a bandwidth requirement of the video conference may be met, it is necessary to reserve information such as a conference site of the video conference and a used network before the video conference. Specifically, it is necessary to start a conference television terminal at a specified video conference starting time at first; then, the video conference is accessed in a manner of calling a special service number; and when the conference site is temporally required to be changed, it is necessary to notify a conference manager to add a new conference site into the video conference at first, and then the video conference is accessed. Therefore, the conference manager is required in the video conference, which may increase operation and maintenance cost.

The document GB2490759 discloses a method for providing setting information for a video or teleconference comprising the sets of: receiving a request for a conference from a communications endpoint, determining if the endpoint has previously engaged in a conference and sending default settings to the communications endpoint wherein the default settings are associated with the type of communications endpoint.

The document US7353251 discloses that there is provided a system, apparatus, and method for automated call launching in a call conferencing network. The system includes computer executable code for sharing information among a plurality of multipoint conference units.

### Summary of the invention

In view of this, the embodiment of the present invention is intended to provide a video conference access method and system and a storage medium, which may require no conference manager to participate in a process of a video conference, ensure an audio/video effect of the video conference and also improve user experiences.

The above object is achieved by a video conference access method according to claim 1 and a video conference access system according to claim 4 and a computer storage medium according to claim 7.

Further improvements and embodiments are provided in the dependent claims.

The technical solutions of embodiments of the present invention are implemented as follows.

In an example, the present invention provides a video conference access method, which may include that:
a conference initiator creates a video conference, and sends conference information of the video conference to a call management server;
the call management server sends a first notice to a participant according to the received conference information;
the participant triggers a first conference television terminal to access the video conference according to a received first notice; and
the participant triggers a second conference television terminal to access the video conference according to the received first notice when a conference site is changed.

Alternatively, the conference information may include: a conference capability, a conference name, a conference time and participant information.

Alternatively, the first notice may include: a conference name, a conference time, a conference access step, video conference access information and a conference identification code.

Alternatively, the step that the participant triggers a first conference television terminal to access the video conference according to a received first notice may include that:
the participant triggers the first conference television terminal, the first conference television terminal interacts with the call management server according to the received first notice to obtain access information of the first conference television terminal, and the call management server notifies a multipoint control unit to add the conference television terminal after confirming that the access information of the first conference television terminal is legal;
or, the participant triggers the first conference television terminal to generate access information of the first conference television terminal itself, and then sends the access information of the first conference television terminal to the call management server according to the received first notice, and the call management server notifies the multipoint control unit to add the conference television terminal after confirming that the access information of the first conference television terminal is legal.

Alternatively, the step that the participant triggers a second conference television terminal to access the video conference according to the received first notice may include that:
the participant triggers the second conference television terminal, the second conference television terminal interacts with the call management server according to the received first notice to obtain access information of the second conference television terminal, and the call management server notifies the multipoint control unit to add the conference television terminal after confirming that the access information of the second conference television terminal is legal;
or, the participant triggers the second conference television terminal to generate access information of the second conference television terminal itself, and then sends the access information of the second conference television terminal to the call management server according to the received first notice, and the call management server notifies the multipoint control unit to add the conference television terminal after confirming that the access information of the second conference television terminal is legal.

Alternatively, the first conference television terminal and the second conference television terminal may belong to different geographic regions.

The embodiment of the present invention further provides a video conference access system, which may include: a conference initiator, a call management server, a participant, a first conference television terminal and a second conference television terminal, herein
the conference initiator may be arranged to create a video conference, and send conference information of the video conference to the call management server;
the call management server may be arranged to send a first notice to the participant according to received conference information;
the participant may be arranged to trigger the first conference television terminal to access the video conference according to a received first notice; and
the participant may further be arranged to trigger the second conference television terminal to access the video conference according to the received first notice when a conference site is changed.

Alternatively, the conference information may include: a conference capability, a conference name, a conference time and participant information.

Alternatively, the first notice may include: a conference name, a conference time, a conference access step, video conference access information and a conference identification code.

Alternatively, the system may further include: a multipoint control unit, arranged to receive a conference television terminal addition notice sent by the call management server and perform conference television terminal addition; and
correspondingly, the operation that the participant triggers the first conference television terminal to access the video conference according to the received first notice may include that:
the participant triggers the first conference television terminal, the first conference television terminal interacts with the call management server according to the received first notice to obtain access information of the first conference television terminal, and the call management server notifies the multipoint control unit to add the conference television terminal after confirming that the access information of the first conference television terminal is legal;
or, the participant triggers the first conference television terminal to generate access information of the first conference television terminal itself, and then sends the access information of the first conference television terminal to the call management server according to the received first notice, and the call management server notifies the multipoint control unit to add the conference television terminal after confirming that the access information of the first conference television terminal is legal.

Alternatively, that the participant triggers the second conference television terminal to access the video conference according to the received first notice may include that:
the participant triggers the second conference television terminal, the second conference television terminal interacts with the call management server according to the received first notice to obtain access information of the second conference television terminal, and the call management server notifies the multipoint control unit to add the conference television terminal after confirming that the access information of the second conference television terminal is legal;
or, the participant triggers the second conference television terminal to generate access information of the second conference television terminal itself, and then sends the access information of the second conference television terminal to the call management server according to the received first notice, and the call management server notifies the multipoint control unit to add the conference television terminal after confirming that the access information of the second conference television terminal is legal.

Alternatively, the first conference television terminal and the second conference television terminal may belong to different geographic regions.

The embodiment of the present invention further provides a computer storage medium, in which computer-executable instructions may be stored, wherein the computer-executable instructions are arranged to execute the abovementioned video conference access method of the embodiment of the present invention.

According to the video conference access method and system and storage medium provided by the embodiment of the present invention, the conference initiator creates the video conference, and sends the conference information of the video conference to the call management server; the call management server sends the first notice to the participant according to the received conference information; the participant triggers the first conference television terminal to access the video conference according to the received first notice; and the participant triggers the second conference television terminal to access the video conference according to the received first notice when the conference site is changed. In such a manner, even though the conference site is changed in a process of the video conference, no conference manager is required to participate in maintenance, so that operation and maintenance cost is reduced; and moreover, an audio/video effect of the video conference may be ensured, and user experiences may also be improved.

### Brief Description of Drawings

FIG. 1 is a basic processing flowchart of a video conference access method according to an embodiment of the present invention;
FIG. 2 is a detailed processing flowchart of a video conference access method according to embodiment 1 of the present invention;
FIG. 3 is a detailed processing flowchart of a video conference access method according to embodiment 2 of the present invention; and
FIG. 4 is a structure diagram of a video conference access system according to an embodiment of the present invention.

### Specific Embodiments

In the embodiment of the present invention, a conference initiator creates a video conference, and sends conference information of the video conference to a call management server; the call management server sends a first notice to a participant according to the received conference information; the participant triggers a first conference television terminal to access the video conference according to the received first notice; and the participant triggers a second conference television terminal to access the video conference according to the received first notice when a conference site is changed.

Here, the first conference television terminal and the second conference television terminal belong to different geographic regions.

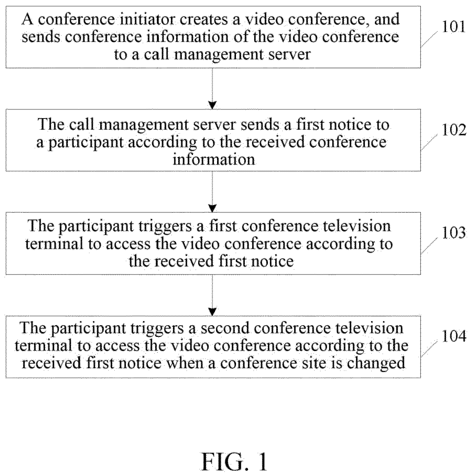

In the embodiment, a basic processing flow of a video conference access method, as shown in FIG. 1, includes the following steps.

In Step 101, a conference initiator creates a video conference, and sends conference information of the video conference to a call management server.

Here, the video conference is implemented on the basis of the Internet.

Herein the conference information includes: a conference capability, a conference name, a conference time, participant information and the like; the participant information includes: communication information such as an E-mail address and terminal number of a participant.

How the conference initiator specifically creates the video conference belongs to a conventional art, and will not be elaborated herein.

In Step 102, the call management server sends a first notice to a participant according to the received conference information.

Specifically, the call management server sends the first notice to the participant according to the participant information in the conference information.

Herein the first notice includes: the conference name, the conference time, a conference access step, video conference access information and a conference identification code; and the video conference access information is: a domain name, an Internet Protocol (IP) address, a special number or the like.

In Step 103, the participant triggers a first conference television terminal to access the video conference according to the received first notice.

Specifically, the participant triggers the first conference television terminal, the first conference television terminal interacts with the call management server according to the received first notice, to obtain access information of the first conference television terminal, and the call management server notifies a multipoint control unit to add the conference television terminal after confirming that the access information of the first conference television terminal is legal;
or, the participant triggers the first conference television terminal to generate its own access information, then the participant sends the access information of the first conference television terminal to the call management server according to the received first notice, and the call management server notifies the multipoint control unit to add the conference television terminal after confirming that the access information of the first conference television terminal is legal.

Herein the access information is: a two-dimensional code, or a barcode, or a coded numerical string or the like; the numerical string is a numerical string generated in a certain coding manner by the call management server according to information meeting a video conference access requirement in the first conference television terminal; and the coding manner may be a private coding manner for the call management server, and the call management server may identify an address of the first conference television terminal, capability information of the first conference television terminal and the like from the numerical string.

The access information includes: information such as an IP address of the first conference television terminal, a name of the first conference television terminal, a coding and decoding capability of the first conference television terminal and a protocol capability of the first conference television terminal.

Here, in case of an encrypted video conference, it is also necessary to encrypt the access information.

In Step 104, the participant triggers a second conference television terminal to access the video conference according to the received first notice when a conference site is changed.

Specifically, the participant triggers the second conference television terminal, the second conference television terminal interacts with the call management server according to the received first notice to obtain access information of the second conference television terminal, and the call management server notifies the multipoint control unit to add the conference television terminal after confirming that the access information of the second conference television terminal is legal;
or, the participant triggers the second conference television terminal to generate its own access information, then the participant sends the access information of the second conference television terminal to the call management server according to the received first notice, and the call management server notifies the multipoint control unit to add the conference television terminal after confirming that the access information of the second conference television terminal is legal.

Herein the access information is: a two-dimensional code, or a barcode, or a coded numerical string or the like.

The access information includes: information such as an IP address of the second conference television terminal, a name of the second conference television terminal, a coding and decoding capability of the second conference television terminal and a protocol capability of the second conference television terminal.

Here, in case of an encrypted video conference, it is also necessary to encrypt the access information.

The first conference television terminal and the second conference television terminal belong to different geographic regions; during a practical application, the first conference television terminal and the second conference television terminal may be the same physical equipment, but a geographic position is changed.

When the IP addresses of the first conference television terminal and the second conference television terminal remain unchanged and only the geographic position is changed, the second conference television terminal may directly call the multipoint control unit to access the video conference because the second conference television terminal has recorded an address of the multipoint control unit.

### Embodiment 1

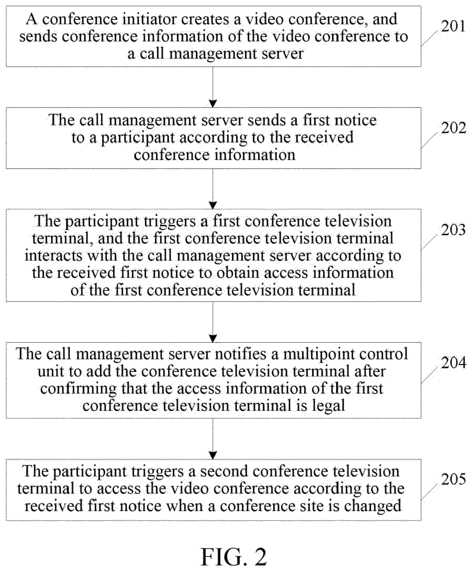

In embodiment 1, a first conference television terminal and a second conference television terminal do not have an access information generation function, and a detailed processing flow of a video conference access method, as shown in FIG. 2, includes the following steps.

In Step 201, a conference initiator creates a video conference, and sends conference information of the video conference to a call management server.

Here, the video conference is implemented on the basis of the Internet.

Herein the conference information includes: a conference capability, a conference name, a conference time, participant information and the like; and the participant information includes: communication information such as an E-mail address and terminal number of a participant.

In Step 202, the call management server sends a first notice to a participant according to the received conference information.

Specifically, the call management server sends the first notice to the participant according to the participant information in the conference information.

Herein the first notice includes: the conference name, the conference time, a conference access step, video conference access information and a conference identification code; and the video conference access information is: a domain name, an IP address, a special number or the like.

In Step 203, the participant triggers the first conference television terminal, and the first conference television terminal interacts with the call management server according to the received first notice to obtain access information of the first conference television terminal.

Specifically, the first conference television terminal calls the call management server according to the conference access step in the received first notice, and the call management server generates the access information according to information meeting a video conference access requirement in the first conference television terminal.

Herein the access information is: a two-dimensional code, or a barcode, or a coded numerical string or the like; the numerical string is a numerical string generated in a certain coding manner by the call management server according to the information meeting the video conference access requirement in the first conference television terminal; and the coding manner may be a private coding manner for the call management server, and the call management server may identify an address of the first conference television terminal, capability information of the first conference television terminal and the like from the numerical string.

The access information includes: information such as an IP address of the first conference television terminal, a name of the first conference television terminal, a coding and decoding capability of the first conference television terminal and a protocol capability of the first conference television terminal.

Here, in case of an encrypted video conference, it is also necessary to encrypt the access information.

How the call management server generates the access information according to the information meeting the video conference access requirement in the first conference television terminal belongs to the conventional art, and will not be elaborated herein.

In Step 204, the call management server notifies a multipoint control unit to add the conference television terminal after confirming that the access information of the first conference television terminal is legal.

Specifically, the participant sends the access information of the first conference television terminal to the call management server, the call management server analyzes the access information, performs authentication and certification on the first conference television terminal, and adds the conference television terminal through the multipoint control unit after the first conference television terminal is authenticated and certified to be legal, and the multipoint control unit adds the conference television terminal, and calls the added conference television terminal.

How the call management server specifically analyzes the access information and performs authentication and certification on the first conference television terminal and how the multipoint control unit adds the conference television terminal belong to the conventional art, and will not be elaborated herein.

In Step 205, the participant triggers the second conference television terminal to access the video conference according to the received first notice when a conference site is changed.

Specifically, the second conference television terminal calls the call management server according to the conference access step in the received first notice; the call management server generates the access information according to information meeting a video conference access requirement in the terminal; the participant sends the access information of the second conference television terminal to the call management server, and the call management server analyzes the access information, performs authentication and certification on the second conference television terminal, and adds the conference television terminal through the multipoint control unit after the second conference television terminal is authenticated and certified to be legal; and the multipoint control unit adds the conference television terminal, and calls the added conference television terminal.

Herein the access information is: a two-dimensional code, or a barcode, or a coded numerical string or the like.

The access information includes: information such as an IP address of the second conference television terminal, a name of the second conference television terminal, a coding and decoding capability of the second conference television terminal and a protocol capability of the second conference television terminal.

Here, in case of an encrypted video conference, it is also necessary to encrypt the access information; and the first conference television terminal and the second conference television terminal belong to different geographic regions.

How the call management server specifically analyzes the access information and performs authentication and certification on the second conference television terminal and how the multipoint control unit adds the conference television terminal belong to the conventional art, and will not be elaborated herein.

### Embodiment 2

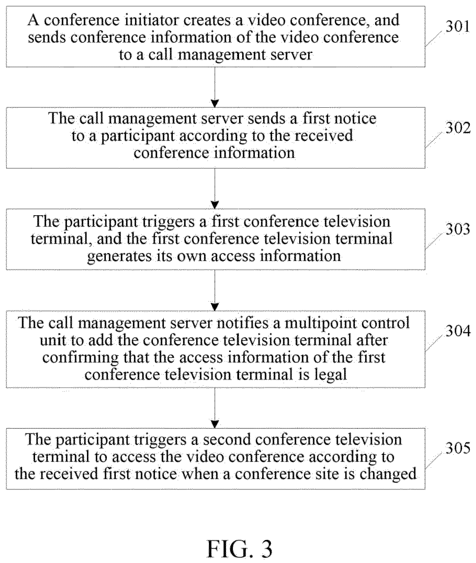

In embodiment 2, a first conference television terminal and a second conference television terminal have an access information generation function, and a detailed processing flow of a video conference access method, as shown in FIG. 3, includes the following steps.

In Step 301, a conference initiator creates a video conference, and sends conference information of the video conference to a call management server.

Here, the video conference is implemented on the basis of the Internet.

Herein the conference information includes: a conference capability, a conference name, a conference time, participant information and the like; and the participant information includes: communication information such as an E-mail address and terminal number of a participant.

In Step 302, the call management server sends a first notice to a participant according to the received conference information.

Specifically, the call management server sends the first notice to the participant according to the participant information in the conference information.

Herein the first notice includes: the conference name, the conference time, a conference access step, video conference access information and a conference identification code; and the video conference access information is: a domain name, an IP address, a special number or the like.

In Step 303, the participant triggers the first conference television terminal, and the first conference television terminal generates own access information.

Herein the access information is: a two-dimensional code, a barcode or the like.

The access information includes: information such as an IP address of the first conference television terminal, a name of the first conference television terminal, a coding and decoding capability of the first conference television terminal and a protocol capability of the first conference television terminal.

Here, in case of an encrypted video conference, it is also necessary to encrypt the access information.

How the first conference television terminal generates its own access information belongs to the conventional art, and will not be elaborated herein.

In Step 304, the call management server notifies a multipoint control unit to add the conference television terminal after confirming that the access information of the first conference television terminal is legal.

Specifically, the participant sends the access information of the first conference television terminal to the call management server according to the received first notice, the call management server analyzes the access information, performs authentication and certification on the first conference television terminal, and adds the conference television terminal through the multipoint control unit after the first conference television terminal is authenticated and certified to be legal, and the multipoint control unit adds the conference television terminal, and calls the added conference television terminal.

How the call management server specifically analyzes the access information and performs authentication and certification on the first conference television terminal and how the multipoint control unit adds the conference television terminal belong to the conventional art, and will not be elaborated herein.

In Step 305, the participant triggers the second conference television terminal to access the video conference according to the received first notice when a conference site is changed.

Specifically, the participant triggers the second conference television terminal, and the second conference television terminal generates its own access information; the participant sends the access information of the second conference television terminal to the call management server according to the received first notice, and the call management server analyzes the access information, performs authentication and certification on the second conference television terminal, and adds the conference television terminal through the multipoint control unit after the second conference television terminal is authenticated and certified to be legal; and the multipoint control unit adds the conference television terminal, and calls the added conference television terminal.

Herein the access information is: a two-dimensional code, or a barcode, or a coded numerical string or the like; and the access information includes: information such as an IP address of the second conference television terminal, a name of the second conference television terminal, a coding and decoding capability of the second conference television terminal and a protocol capability of the second conference television terminal.

Here, in case of an encrypted video conference, it is also necessary to encrypt the access information; and the first conference television terminal and the second conference television terminal belong to different geographic regions.

How the call management server specifically analyzes the access information and performs authentication and certification on the second conference television terminal and how the multipoint control unit adds the conference television terminal belong to the conventional art, and will not be elaborated herein.

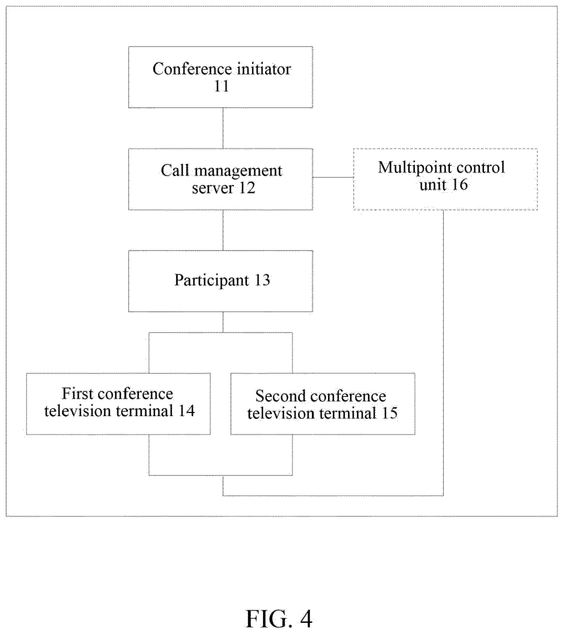

In order to implement the abovementioned video conference access method, the embodiment of the present invention further provides video conference access User Equipment (UE), and a structure of the UE, as shown in FIG. 4, includes: a conference initiator 11, a call management server 12, a participant 13, a first reference television terminal 14 and a second conference television terminal 15, wherein the conference initiator 11 is arranged to create a video conference, and send conference information of the video conference to the call management server.

Herein the conference information includes: a conference capability, a conference name, a conference time and participant information.

The call management server 12 is arranged to send a first notice to the participant according to the received conference information.

Herein the first notice includes: the conference name, the conference time, a conference access step, video conference access information and a conference identification code.

The participant 13 is arranged to trigger the first conference television terminal to access the video conference according to the received first notice.

Specifically, that the participant triggers the first conference television terminal to access the video conference according to the received first notice includes that:
the participant triggers the first conference television terminal, the first conference television terminal interacts with the call management server according to the received first notice to obtain access information of the first conference television terminal, and the call management server notifies a multipoint control unit to add the conference television terminal after confirming that the access information of the first conference television terminal is legal;
or, the participant triggers the first conference television terminal to generate its own access information, and then sends the access information of the first conference television terminal to the call management server according to the received first notice, and the call management server notifies the multipoint control unit to add the conference television terminal after confirming that the access information of the first conference television terminal is legal.

Correspondingly, the system further includes: the multipoint control unit 16, arranged to receive a conference television terminal addition notice sent by the call management server and perform conference television terminal addition.

The participant 13 is further arranged to trigger the second conference television terminal to access the video conference according to the received first notice when a conference site is changed.

Specifically, the second conference television terminal calls the call management server according to the conference access step in the received first notice; the call management server generates access information according to information meeting a video conference access requirement in the terminal; the participant sends the access information of the second conference television terminal to the call management server, and the call management server analyzes the access information, performs authentication and certification on the second conference television terminal, and adds the conference television terminal through the multipoint control unit after the second conference television terminal is authenticated and certified to be legal; and the multipoint control unit adds the conference television terminal, and calls the added conference television terminal.

Herein the access information is: a two-dimensional code, or a barcode, or a coded numerical string or the like; and the access information includes: information such as an IP address of the second conference television terminal, a name of the second conference television terminal, a coding and decoding capability of the second conference television terminal and a protocol capability of the second conference television terminal.

Here, the first conference television terminal and the second conference television terminal belong to different geographic regions.

In an embodiment of the present invention, if being implemented in form of software function module and sold or used as an independent product, the abovementioned message transmission method may also be stored in a computer-readable storage medium. Based on such understanding, the technical solution of the embodiment of the present invention substantially or a part with contributions to the conventional art may be embodied in form of software product, and the computer software product is stored in a storage medium, including a plurality of instructions arranged to enable a piece of computer equipment (which may be a personal computer, a server, network equipment or the like) to execute all or part of the method in each embodiment of the present invention. The abovementioned storage medium includes: various media capable of storing program codes such as a U disk, a mobile hard disk, a Read-Only Memory (ROM), a magnetic disk or a compact disc. Therefore, an embodiment of the present invention is not limited to any specific hardware and software combination.

Correspondingly, an embodiment of the present invention further provides a computer storage medium, in which a computer program is stored, the computer program is arranged to execute the abovementioned video conference access method of an embodiment of the present invention.

The above is only a list of examples of the present invention and is not intended to limit the scope of protection of the present invention.

## Claims

1. A video conference access method, comprising the steps of:
creating, by a conference initiator, a video conference, and sending conference information of the video conference to a call management server (101);
sending, by the call management server, a notice to a participant according to received conference information (102);
triggering, by the participant, a first conference television terminal to access the video conference according to a received notice (103); the method being **characterised by**
when a conference site is changed, triggering, by the participant, a second conference television terminal to access the video conference according to the received notice (104), so that the second conference television terminal accesses the video conference,
wherein the first conference television terminal and the second conference television terminal belong to different geographic regions,
wherein triggering, by the participant, the first or second conference television terminal to access the video conference according to the received notice comprises: implementing, by the first or second conference television terminal, interaction with the call management server according to the received notice to obtain access information of the first or second conference television terminal; and notifying, by the call management server, a multipoint control unit to add the first or second conference television terminal after confirming that the access information of the first or second conference television terminal is legal; or generating access information of the first or second conference television terminal itself, and then sending the access information of the first or second conference television terminal to the call management server according to the received notice, and notifying, by the call management server, the multipoint control unit to add the first or second conference television terminal after confirming that the access information of the first or second conference television terminal is legal.

2. The video conference access method according to claim 1, wherein the conference information comprises: a conference capability, a conference name, a conference time and participant information.

3. The video conference access method according to claim 1, wherein the notice comprises:
a conference name, a conference time, a conference access step, video conference access information and a conference identification code.

4. A video conference access system comprising: a conference initiator (11), a call management server (12), a participant (13), a first conference television terminal (14) and a second conference television terminal (15), wherein
the conference initiator (11) is arranged to create a video conference, and send conference information of the video conference to the call management server;
the call management server (12) is arranged to send a notice to the participant according to received conference information;
the participant (13) is arranged to trigger the first conference television terminal (14) to access the video conference according to the received notice; the system being **characterised in that** the participant is arranged to trigger the second conference television terminal (15) to access the video conference according to the received notice when a conference site is changed, wherein the first conference television terminal (14) and the second conference television terminal (15) belong to different geographic regions;
a multipoint control unit (16), arranged to receive a conference television terminal addition notice sent by the call management server and perform conference television terminal addition, wherein by triggering the first or second conference television terminal to access the video conference according to the received notice the first or second conference television terminal is adapted to interact with the call management server (12) according to the received notice to obtain access information of the first or second conference television terminal; and the call management server (12) is adapted to notify the multipoint control unit (16) to add the first or second conference television terminal after confirming that the access information of the first or second conference television terminal is legal; or the first or second conference television terminal is adapted to generate access information of the first or second conference television terminal itself, and to send the access information of the first or second conference television terminal to the call management server (12) according to the received notice, and the call management server (12) is adapted to notify the multipoint control unit (16) to add the first or second conference television terminal after confirming that the access information of the first or second conference television terminal is legal.

5. The video conference access system according to claim 4, wherein the conference information comprises: a conference capability, a conference name, a conference time and participant information.

6. The video conference access system according to claim 4, wherein the notice comprises:
a conference name, a conference time, a conference access step, video conference access information and a conference identification code.

7. A computer storage medium, in which computer-executable instructions are stored, wherein the computer-executable instructions are arranged to execute the video conference access method according to any one of claims 1-3.

## Patentansprüche

1. Ein Videokonferenz-Zugangsverfahren, das folgende Schritte umfasst:
Erstellen einer Videokonferenz durch einen Konferenzinitiator und Senden von Konferenzinformationen der Videokonferenz an einen Anrufverwaltungsserver (101);
Senden einer Benachrichtigung an einen Teilnehmer durch den Anrufverwaltungsserver entsprechend den erhaltenen Konferenzinformationen (102);
Auslösen eines ersten Konferenz-Fernsehgerätes durch den Teilnehmer, um auf die Videokonferenz gemäß einer erhaltenen Benachrichtigung zuzugreifen (103);
wobei das Verfahren **dadurch gekennzeichnet ist, dass**
wenn der Konferenzort gewechselt wird, ein zweites Konferenz-Fernsehgeräts durch den Teilnehmer ausgelöst wird, um auf die Videokonferenz gemäß der erhaltenen Benachrichtigung zuzugreifen (104), so dass das zweite Konferenz-Fernsehgerät auf die Videokonferenz zugreift,
wobei das erste Konferenz-Fernsehgerät und das zweite Konferenz-Fernsehgerät zu unterschiedlichen geographischen Regionen gehören,
wobei das Auslösen des ersten oder zweiten Konferenz-Fernsehgerätes durch den Teilnehmer für den Zugriff auf die Videokonferenz gemäß der erhaltenen Benachrichtigung umfasst:
Durchführen der Interaktion mit dem Anrufverwaltungsserver durch das erste oder zweite Konferenz-Fernsehgerät entsprechend der erhaltenen Benachrichtigung, um Zugangsinformationen des ersten oder zweiten Konferenz-Fernsehgeräts zu erhalten; und Benachrichtigen einer Mehrpunkt-Steuereinheit durch den AnrufverwaltungsServer, um das erste oder zweite Konferenz-Fernsehgerät hinzuzufügen, nachdem bestätigt wurde, dass die Zugangsinformationen des ersten oder zweiten Konferenz-Fernsehgeräts zulässig sind; oder
Erstellen von Zugangsinformationen des ersten oder zweiten Konferenz-Fernsehgeräts selbst und dann Senden der Zugangsinformationen des ersten oder zweiten Konferenz-Fernsehgeräts an den Anrufverwaltungsserver entsprechend der erhaltenen Benachrichtigung und Benachrichtigen der Mehrpunkt-Steuereinheit durch den Anrufverwaltungsserver, das erste oder zweite Konferenz-Fernsehgerät hinzuzufügen, nachdem bestätigt wurde, dass die Zugangsinformationen des ersten oder zweiten Konferenz-Fernsehgeräts zulässig sind.

2. Videokonferenz-Zugangsverfahren nach Anspruch 1, bei dem die Konferenzinformationen umfassen: eine Konferenzfähigkeit, einen Konferenznamen, eine Konferenzzeit und Teilnehmerinformationen.

3. Videokonferenz-Zugangsverfahren nach Anspruch 1, wobei die Benachrichtigung umfasst: einen Konferenznamen, eine Konferenzzeit, einen Konferenzzugangsschritt, Videokonferenzzugangsinformationen und einen Konferenzidentifikationscode.

4. Ein Videokonferenz-Zugangssystem umfassend: einen Konferenzinitiator (11), einen Anrufverwaltungsserver (12), einen Teilnehmer (13), ein erstes Konferenz-Fernsehgerät (14) und ein zweites Konferenz-Fernsehgerät (15),
wobei der Konferenzinitiator (11) angeordnet ist, um eine Videokonferenz zu erstellen und die Konferenzinformationen der Videokonferenz an den Anrufverwaltungsserver zu senden;
der Anrufverwaltungsserver (12) so angeordnet ist, dass er eine Benachrichtigung an den Teilnehmer entsprechend der erhaltenen Konferenzinformationen sendet;
der Teilnehmer (13) angeordnet ist, um das erste Konferenz-Fernsehgerät (14) zu veranlassen, auf die Videokonferenz gemäß der empfangenen Benachrichtigung zuzugreifen; wobei das System **dadurch gekennzeichnet ist, dass** der Teilnehmer angeordnet ist, um das zweite Konferenz-Fernsehgerät (15) zu veranlassen, auf die Videokonferenz gemäß der empfangenen Benachrichtigung zuzugreifen, wenn ein Konferenzort geändert wird, wobei das erste Konferenz-Fernsehgerät (14) und das zweite Konferenz-Fernsehgerät (15) zu unterschiedlichen geographischen Regionen gehören;
eine Mehrpunkt-Steuereinheit (16), so angeordnet ist, dass sie eine vom Anrufverwaltungsserver gesendete Benachrichtigung über die Hinzufügung eines Konferenz-Fernsehgerätes empfängt und die Hinzufügung eines Konferenz-Fernsehgerätes durchführt,
wobei durch das Auslösen des ersten oder zweiten Konferenz-Fernsehgerätes zum Zugang zu der Videokonferenz gemäß der empfangenen Benachrichtigung das erste oder zweite Konferenz-Fernsehgerät so angepasst ist, dass es mit dem Anrufverwaltungsserver (12) gemäß der empfangenen Benachrichtigung interagiert, um Zugangsinformationen des ersten oder zweiten Konferenz-Fernsehgerätes zu erhalten; und der Anrufverwaltungsserver (12) so angepasst ist, dass er die Mehrpunkt-Steuereinheit (16) benachrichtigt, um das erste oder zweite Konferenz-Fernsehgerät hinzuzufügen, nachdem bestätigt wurde, dass die Zugangsinformationen des ersten oder zweiten Konferenz-Fernsehgerätes zulässig sind;
oder das erste oder zweite Konferenz-Fernsehgerät so angepasst ist, dass es Zugangsinformationen des ersten oder zweiten Konferenz-Fernsehgeräts selbst erzeugt und die Zugangsinformationen des ersten oder zweiten Konferenz-Fernsehgeräts gemäß der empfangenen Benachrichtigung an den Anrufverwaltungsserver (12) sendet, und der Anrufverwaltungsserver (12) so angepasst ist, dass er die Mehrpunkt-Steuereinheit (16) benachrichtigt, das erste oder zweite Konferenz-Fernsehgerät hinzuzufügen, nachdem bestätigt wurde, dass die Zugangsinformationen des ersten oder zweiten Konferenz-Fernsehgeräts zulässig sind.

5. Videokonferenz-Zugangssystem nach Anspruch 4, bei dem die Konferenzinformationen umfassen: eine Konferenzfähigkeit, einen Konferenznamen, eine Konferenzzeit und Teilnehmerinformationen.

6. Videokonferenz-Zugangssystem nach Anspruch 4, wobei die Benachrichtigung umfasst: einen Konferenznamen, eine Konferenzzeit, einen Konferenzzugangsschritt, Videokonferenzzugangsinformationen und einen Konferenzidentifikationscode.

7. Ein Computerspeichermedium, in dem computerausführbare Befehle gespeichert sind, wobei die computerausführbaren Befehle so angeordnet sind, dass sie das Videokonferenz-Zugangsverfahren gemäß einem der Ansprüche 1-3 ausführen.

## Revendications

1. Un Procédé d'accès à une conférence vidéo, comprenant les étapes suivantes :
la création, par un initiateur de conférence, d'une conférence vidéo, et la transmission des informations de la conférence vidéo à un serveur de gestion des appels (101) ;
la transmission, par le serveur de gestion des appels, d'un avis à un participant selon les informations de conférence reçues (102) ;
le déclenchement, par le participant, d'un premier terminal de télévision de conférence pour accéder à la conférence vidéo selon un avis reçu (103) ;
le procédé étant **caractérisé par**
lorsqu'un site de conférence est modifié, le déclenchement, par le participant, d'un second terminal de télévision de conférence pour accéder à la conférence vidéo selon l'avis reçu (104), de sorte que le second terminal de télévision de conférence accède à la conférence vidéo,
dans lequel le premier terminal de télévision de conférence et le second terminal de télévision de conférence appartiennent à des régions géographiques différentes,
dans lequel le déclenchement, par le participant, du premier ou du second terminal de télévision de conférence pour accéder à la conférence vidéo selon l'avis reçu comprend :
en mettant en œuvre, par le premier ou le second terminal de télévision de conférence, une interaction avec le serveur de gestion des appels selon l'avis reçu, pour obtenir les informations d'accès du premier ou du second terminal de télévision de conférence ; et en notifiant, par le serveur de gestion des appels, une unité de contrôle à points multiples pour ajouter le premier ou le second terminal de télévision de conférence après avoir confirmé que les informations d'accès du premier ou du second terminal de télévision de conférence sont légales ; ou
générer les informations d'accès du premier ou du second terminal de télévision de conférence lui-même, puis transmettre les informations d'accès du premier ou du second terminal de télévision de conférence au serveur de gestion des appels selon l'avis reçu, et notifier, par le serveur de gestion des appels, à l'unité de contrôle à points multiples d'ajouter le premier ou le second terminal de télévision de conférence après avoir confirmé que les informations d'accès du premier ou du second terminal de télévision de conférence sont légales.

2. Procédé d'accès à la conférence vidéo selon la revendication 1, dans lequel les informations de la conférence comprennent : une capacité de conférence, un nom de conférence, une heure de conférence et des informations sur les participants.

3. Procédé d'accès à la conférence vidéo selon la revendication 1, dans lequel l'avis comprend : un nom de conférence, une heure de conférence, une étape d'accès à la conférence, des informations d'accès à la conférence vidéo et un code d'identification de conférence.

4. Un Système d'accès à une conférence vidéo comprenant : un initiateur de conférence (11), un serveur de gestion d'appels (12), un participant (13), un premier terminal de télévision de conférence (14) et un second terminal de télévision de conférence (15),
dans lequel l'initiateur de la conférence (11) est disposé à créer une conférence vidéo, et à envoyer les informations de la conférence vidéo au serveur de gestion des appels ;
le serveur de gestion des appels (12) est disposé à envoyer un avis au participant selon les informations de la conférence reçues ;
le participant (13) est disposé à déclencher le premier terminal de télévision de conférence (14) pour accéder à la conférence vidéo selon l'avis reçu ; le système étant **caractérisé en ce que** le participant est disposé à déclencher le second terminal de télévision de conférence (15) pour accéder à la conférence vidéo selon l'avis reçu lorsqu'un site de conférence est changé, dans lequel le premier terminal de télévision de conférence (14) et le second terminal de télévision de conférence (15) appartiennent à des régions géographiques différentes ;
une unité de contrôle à points multiples (16), disposée à recevoir un avis d'ajout de terminal de télévision de conférence envoyé par le serveur de gestion des appels et à effectuer l'ajout de terminal de télévision de conférence,
dans lequel le déclenchement du premier ou du second terminal de télévision de conférence pour accéder à la conférence vidéo selon l'avis reçu est adapté pour interagir avec le serveur de gestion des appels (12) selon l'avis reçu pour obtenir des informations d'accès du premier ou du second terminal de télévision de conférence ; et le serveur de gestion des appels (12) est adapté pour notifier à l'unité de contrôle à points multiples (16) d'ajouter le premier ou le second terminal de télévision de conférence après avoir confirmé que les informations d'accès du premier ou du second terminal de télévision de conférence sont légales ;
ou le premier ou le second terminal de télévision de conférence est adapté pour générer des informations d'accès du premier ou du second terminal de télévision de conférence lui-même, et pour envoyer les informations d'accès du premier ou du second terminal de télévision de conférence au serveur de gestion des appels (12) selon l'avis reçu, et le serveur de gestion des appels (12) est adapté pour notifier à l'unité de contrôle à points multiples (16) d'ajouter le premier ou le second terminal de télévision de conférence après avoir confirmé que les informations d'accès du premier ou du second terminal de télévision de conférence sont légales.

5. Système d'accès à la conférence vidéo selon la revendication 4, dans lequel les informations de la conférence comprennent: une capacité de conférence, un nom de conférence, une heure de conférence et des informations sur les participants.

6. Système d'accès à la conférence vidéo selon la revendication 4, dans lequel l'avis comprend : un nom de conférence, une heure de conférence, une étape d'accès à la conférence, des informations d'accès à la conférence vidéo et un code d'identification de la conférence.

7. Un support de stockage informatique, dans lequel sont stockées des instructions exécutables par ordinateur, dans lequel les instructions exécutables par ordinateur sont disposées pour exécuter le procédé d'accès à la conférence vidéo selon l'une quelconque des revendications 1-3.
